# EUROPEAN PATENT APPLICATION

(11) **EP 1 776 875 A1**
(43) Date of publication of application: **25.04.2007**
(21) Application number: 05768802.0
(22) Date of filing: 01.08.2005
(51) Int. Cl.: A23L 1/237, A23L 1/227, A23L 1/221

(54) **SEASONING COMPOSITION, SEASONING MATERIAL AND PROCESS FOR PRODUCING FOOD THEREWITH**

(30) Priority: 03.08.2004 JP 2004226988
(71) Applicant: Ajinomoto Co., Inc., Tokyo 104-8315 (JP)
(72) Inventor: KURODA, Motonaka c/o AJINOMOTO CO., INC., Kawasaki-shi, Kanagawa 210-8681 (JP); NOZAWA, Yoshizu c/o AJINOMOTO CO., INC., Kawasaki-shi, Kanagawa 210-8681 (JP)
(74) Representative: Strehl Schübel-Hopf & Partner
(86) International application number: PCT/JP2005/014478
(87) International publication number: WO 2006/013997

(57) **Abstract**

It is intended to provide a seasoning composition containing, with respect to 100 parts of potassium chloride, 1.5 to 70 parts by weight of histidine or its salt, 4 to 100 parts by weight of lysine or its salt, 2 to 100 parts by weight of sodium inosinate or sodium guanylate, 20 to 130 parts by weight of lactic acid or its salt, and 5 to 50 parts by weight of phosphoric acid or its salt; a seasoning material containing, with respect to 100 parts by weight of the seasoning composition, 1 to 100 parts by weight in solid content or powder content of a seafood extract/meat extract; and a method for producing foods that are excellent in flavor such as favorableness of saltiness and depth and richness of taste and reduced in salt by seasoning with the use of the seasoning composition or the seasoning material.

## Description

### Technical Field

This invention relates to a seasoning composition and a seasoning material excellent in flavor such as favorableness of saltiness, depth of taste, and richness ("KOKUMI" taste) and capable of reducing salt as well as to a production process for foods that are excellent in flavor and reduced in salt.

### Background Art

Salt is widely used as a basic seasoning for seasoning foods, while it is well known that an excessive salt intake adversely affects on cardiovascular diseases such as hypertension and heart diseases. Use of potassium chloride as a substitute for salt has heretofore been studied, but a perfect substitute for salt has not been realized since potassium chloride has irritating bitterness.

In order to solve the above problem, methods of suppressing the bitterness of potassium chloride by mixing the potassium chloride with a glutamate, amino acid, and one or more of an organic acid salt, a nucleic acid-related flavoring substance, an intense sweetener such as glycyrrhizin, and the like have been reported (JP-A-57-138359, JP-A-59-187761, JP-A-11-187841). However, the above technologies were insufficient for suppressing the above-mentioned undesirable bitterness and harshness unique to potassium chloride. Also, a method of obtaining a salt substitute by using histidine hydrochloride and/or lysine hydrochloride, nucleic acid, a sweetener component, and sodium citrate (JP-A-57-163464); a method of obtaining a salt substitute composition by mixing potassium chloride with organic acid calcium, glutamate or/and salt of nucleotide (Japanese Patent NO. 1794303); methods of mixing sodium chloride with an inorganic salt such as potassium chloride and magnesium sulfate, an extract, and organic acid salt (JP-A-5-328937 and JP-A-10-4917); methods of mixing sodium chloride with potassium chloride, sodium ascorbate, and sodium gluconate (JP-A-9-507125, JP-A-10-57003); etc. have been reported, but the bitterness and the harshness are not suppressed by the methods, and the methods have a problem of giving an unfavorable flavor such as sourness.

### Disclosure of the Invention

### [Problem to be Solved by the Invention]

Under the above-described circumstances of the conventional technologies, an object of this invention is to provide a seasoning composition and a seasoning material that are excellent in flavor and capable of reducing salt.

### [Means for Solving the Problem]

The inventor of this invention has made extensive efforts in order to solve the above-described problem to find that it is possible to provide a seasoning composition capable of reducing salt and excellent in flavor such as favorableness of saltiness and depth/richness of taste by using a seasoning composition characterized by comprising, with respect to 100 parts by weight of potassium chloride, 1. 5 to 70 parts by weight of histidine or its salt, 4 to 100 parts by weight of lysine or its salt, 2 to 100 parts by weight of sodium inosinate and/or sodium guanylate, 20 to 130 parts by weight of lactic acid or its salt, and 5 to 50 parts by weight of phosphoric acid or its salt. Also, the inventor has proved that it is possible to obtain a seasoning material that is more favorable in flavor and capable of reducing salt in foods by mixing the seasoning composition with a seafood extract, a dried seafood powder, a seafood powder, a meat extract, or a meat powder.

### Best Mode for Carrying out the Invention

Hereinafter, this invention will be described in detail.

As potassium chloride to be used in this invention, any one of a powder, a granule, a solution of purified potassium chloride is usable. Also, a material containing potassium chloride, such as bittern which is a byproduct produced when purifying sodium chloride from seawater may be used.

Examples of histidine or its salt to be used in this invention include a histidine base, histidine hydrochloride, and the like, and those obtainable by microbial fermentation may be used. As the histidine hydrochloride, a monohydrate or an anhydride may be used. Also, histidine hydrochloride or a histidine hydrochloride-containing composition obtainable from an extract of fish such as bonito and tuna may be used. A content of the histidine or its salt to 100 parts by weight of potassium chloride may be 1. 5 to 70 parts by weight, preferably 3 to 40 parts by weight, more preferably 7 to 20 parts by weight. Saltiness is weak to cause unfavorable flavor when the content is less than 1.5 parts by weight, while sourness and bitterness become undesirably strong when the content is more than 70 parts by weight.

As the lysine to be used in this invention, a lysine base or lysine hydrochloride is usable. A hydrate is ordinarily used as the lysine hydrochloride, but an anhydride obtained by drying or the like is also usable. Though lysine obtained by microbial fermentation is ordinarily used, those obtained by chemical synthesis or from a protein hydrolysate may be used. Also, it is possible to use a food material containing lysine at a high concentration. A content of the lysine or its salt to 100 parts by weight of potassium chloride may be 4 to 100 parts by weight, preferably 8 to 60 parts by weight, more preferably 15 to 50 parts by weight. Saltiness is weak to cause unfavorable flavor when the content is less than 4 parts by weight, while bitterness and harshness become undesirably strong when the content is more than 100 parts by weight.

A hydrate salt may preferably be used as the sodium inosinate to be used in this invention in general, and an anhydride obtainable by drying operation may also be used. Likewise, though a hydrate is ordinarily used as the sodium guanylate, an anhydride obtainable by drying operation may be used. It is also possible to use a food material containing guanylic acid at a high concentration. A content of the sodium inosinate and/or the sodium guanylate to 100 parts by weight of potassium chloride may be 2 to 100 parts by weight, preferably 4 to 60 parts by weight. Saltiness is weak to cause unfavorable flavor when the content is less than 2 parts by weight, while umami becomes undesirably strong when the content is more than 100 parts by weight.

As the lactic acid or its salt to be used in this invention, 50% lactic acid and 50% sodium lactate may be used as a material to be used for a liquid composition. Also, for the use for a seasoning in the form of a powder or a granule, a penta-hydrate salt or an anhydrous salt of calcium lactate, or a lactic acid powder or a sodium lactate powder obtainable by adding a vehicle to lactic acid or sodium lactate followed by drying are usable. A content of the lactic acid or its salt to 100 parts by weight of potassium chloride may be 20 to 130 parts by weight, preferably 30 to 90 parts by weight. Saltiness is weak to cause unfavorable flavor when the content is less than 20 parts by weight, while bitterness becomes undesirably strong when the content is more than 130 parts by weight.

As the phosphoric acid or its salt to be used in this invention, an alkali metal salt of phosphoric acid may preferably be used. It is possible to use a phosphoric acid sodium salt, and a hydrate or an anhydride of mono-potassium phosphate, a hydrate or an anhydride of di-potassium phosphate, and a hydrate or an anhydride of tri-potassium phosphate may preferably be used for the purpose of reducing a sodium content. It is preferable to appropriately select and use one or more of the above-described three types of hydrates or anhydrates depending on mixing ratios of other compositions and pH of objective foods. Also, it is possible to use the phosphoric acid as it is as a part or whole of a phosphoric acid source depending on pH. A content of the phosphoric acid or its salt to 100 parts by weight of potassium chloride may be 5 to 50 parts by weight, preferably 7 to 30 parts by weight. Saltiness is weak to cause unfavorable flavor when the content is less than 5 parts by weight, while an astringent taste is imparted when the content is more than 50 parts by weight.

Ranges of optimum usage amounts of potassium chloride, histidine or its salt, lysine or its salt, sodium inosinate and/or sodium guanylate, lactic acid or its salt, and phosphoric acid or its salt to be mixed for producing the seasoning composition capable of reducing salt and excellent in flavor and the foods reduced in salt and excellent in flavor are varied depending on foods and drinks for which the seasoning composition or the foods is used; however, it is possible to decide appropriate use amounts by preliminarily conducting simple trials.

Also, by mixing the seasoning composition with a seafood extract, a dried seafood, a meat extract, or a meat itself, it is possible to provide a seasoning material capable of reducing salt and having a flavor of the above-described natural material. As the seafood extract, an extract obtainable by extraction from bonito, mackerel, sardine, red sea bream, salmon, oyster, or scallop with the use of water or ethyl alcohol may be used. As the dried seafood, dried bonito, dried mackerel, dried round herring, dried horse mackerel, dried tuna, dried small sardine, and the like are usable. Also, extracts obtained by extraction from the above dried seafood with the use of water or ethyl alcohol are usable. As the meat-based ingredient, those obtained by heating chicken, pork, beef, lamb, horse meat, or the like, followed by processing the heated meat into a paste or followed by drying and powderization or extracts obtained by extraction from the above-described meats with the use of hot water or ethyl alcohol are usable. With respect to 100 parts by weight of the seasoning composition, it is preferable to mix 1 to 100 parts by weight in solid content of the seafood extract, the dried seafood powder, the meat extract, or the meat powder.

By using the seasoning composition or the seasoning material obtained by the above technology, it is possible to produce foods that are reduced in salt content and excellent in favorableness of saltiness and flavor such as depth/richness of taste. Objects of this invention are the seasoning composition in the form of a powder, a granule, or a liquid as well as the seasoning material and foods obtainable by using the seasoning composition.

Hereinafter, a production method and effects of the seasoning composition and the seasoning material of this invention will be described in conjunction with experiment examples and examples. Note that this invention is not limited by the experiment examples and examples.

### [Examples]

### Experiment Example 1

A soybean paste soup was prepared by suspending a 5.4% soybean paste (commercially available white soybean paste; product of Hanamaruki Foods Inc.; salt concentration in NaCl equivalent: 12.4%) into a lukewarm water, and then various soybean paste soup were prepared by adding various materials in accordance with the composition table shown in Table 1 (Each of samples was adjusted to 100 ml to be subjected to evaluation). In this experiment, a histidine hydrochloride monohydrate, lysine hydrochloride, a di-sodium inosinate 7.5-hydrated salt (IN (TRI) ; product of Ajinomoto Co., Inc.), 50% sodium lactate, and di-potassium phosphate (anhydride) were used. A flavor evaluation on the thus-obtained soybean paste soup was conducted by five panel members. Results are shown in Table 1. The samples were subjected to a sensory evaluation after adjusting a sodium concentration of each of the samples to 0.31% (w/w; NaCl equivalent: 0.80%) by adding sodium chloride. In the sensory evaluation, a degree of saltiness and favorableness of taste of the sample having a sodium concentration of 0.4% (w/w; NaCl equivalent: 1.0%) were set to +++, and the evaluation was conducted based on 5 point scale of from - (no saltiness or very unfavorable) to ++++ (very strong or very favorable). Likewise, depth/richness was evaluated by setting a point of the sample having the sodium concentration of 0.4% (w/w; NaCl equivalent: 1.0%) to ++. As shown in Table 1, it was confirmed that a good flavor wherein saltiness is strong and favorable and depth/richness of taste is strong was expressed when: histidine hydrochloride is in the range of 2 to 50; lysine hydrochloride is in the range of 5 to 100; sodium inosinate is in the range of 2 to 60; lactic acid is in the range of 20 to 100; and salt of mono-potassium phosphate is in the range of 10 to 50, with respect to potassium chloride in a weight of 100.

**[Table 1]**

| | Concentration when eaten (mg/dL) | | | | | | Ratio to KCl weight | | | | | | | |
|---|---|---|---|---|---|---|---|---|---|---|---|---|---|---|
| Sample No. | KCl | His | Lactic acid | Lys | IMP | Phosphoric acid | His | Lactic acid | Lys | IMP | Phosphoric acid | Degree of Saltiness | Degree of depth/richness | Favorableness of taste |
| 1 | 200 | 20 | 60 | 50 | 15 | 20 | 10 | 30 | 25 | 7.5 | 10 | ++++ | ++++ | ++++ |
| 2 | 0 | 20 | 60 | 50 | 15 | 20 | - | - | - | - | - | - | + | + |
| 3 | 200 | 0 | 60 | 50 | 15 | 20 | 0 | 30 | 25 | 7.5 | 10 | + | - | - |
| 4 | 200 | 20 | 0 | 50 | 15 | 20 | 10 | 0 | 25 | 7.5 | 10 | - | - | - |
| 5 | 200 | 20 | 60 | 0 | 15 | 20 | 10 | 30 | 0 | 7.5 | 10 | - | - | - |
| 6 | 200 | 20 | 60 | 50 | 0 | 20 | 10 | 30 | 25 | 0 | 10 | + | - | - |
| 7 | 200 | 20 | 60 | 50 | 15 | 0 | 10 | 30 | 25 | 7.5 | 0 | + | - | - |
| 8 | 10 | 20 | 60 | 50 | 15 | 20 | 200 | 600 | 500 | 150 | 200 | - | - | - |
| 9 | 25 | 20 | 60 | 50 | 15 | 20 | 80 | 240 | 200 | 60 | 80 | - | - | - |
| 10 | 100 | 20 | 60 | 50 | 15 | 20 | 20 | 60 | 50 | 15 | 20 | ++ | ++ | ++ |
| 11 | 400 | 20 | 60 | 50 | 15 | 20 | 5 | 15 | 12.5 | 3.75 | 5 | ++++ | ++++ | +++ |
| 12 | 800 | 20 | 60 | 50 | 15 | 20 | 2.5 | 7.5 | 6.25 | 1.875 | 2.5 | ++++ | - | - |
| 13 | 200 | 1 | 60 | 50 | 15 | 20 | 0.5 | 30 | 25 | 7.5 | 10 | - | - | - |
| 14 | 200 | 3 | 60 | 50 | 15 | 20 | 1.5 | 30 | 25 | 7.5 | 10 | ++ | + | + |
| 15 | 200 | 5 | 60 | 50 | 15 | 20 | 2.5 | 30 | 25 | 7.5 | 10 | ++ | ++ | ++ |
| 16 | 200 | 10 | 60 | 50 | 15 | 20 | 5 | 30 | 25 | 7.5 | 10 | +++ | +++ | +++ |
| 17 | 200 | 40 | 60 | 50 | 15 | 20 | 20 | 30 | 25 | 7.5 | 10 | +++ | ++ | +++ |
| 18 | 200 | 80 | 60 | 50 | 15 | 20 | 40 | 30 | 25 | 7.5 | 10 | ++ | ++ | ++ |
| 19 | 200 | 160 | 60 | 50 | 15 | 20 | 80 | 30 | 25 | 7.5 | 10 | + | - | - |
| 20 | 200 | 20 | 15 | 50 | 15 | 20 | 10 | 7.5 | 25 | 7.5 | 10 | - | - | - |
| 21 | 200 | 20 | 30 | 50 | 15 | 20 | 10 | 15 | 25 | 7.5 | 10 | + | - | - |
| 22 | 200 | 20 | 120 | 50 | 15 | 20 | 10 | 60 | 25 | 7.5 | 10 | ++ | ++ | ++ |
| 23 | 200 | 20 | 180 | 50 | 15 | 20 | 10 | 90 | 25 | 7.5 | 10 | +++ | +++ | +++ |
| 24 | 200 | 20 | 240 | 50 | 15 | 20 | 10 | 120 | 25 | 7.5 | 10 | ++ | - | - |
| 25 | 200 | 20 | 60 | 3 | 15 | 20 | 10 | 30 | 1.5 | 7.5 | 10 | - | - | - |
| 26 | 200 | 20 | 60 | 6 | 15 | 20 | 10 | 30 | 3 | 7.5 | 10 | - | + | + |
| 27 | 200 | 20 | 60 | 12 | 15 | 20 | 10 | 30 | 6 | 7.5 | 10 | + | + | + |
| 28 | 200 | 20 | 60 | 25 | 15 | 20 | 10 | 30 | 12.5 | 7.5 | 10 | ++ | ++ | ++ |
| 29 | 200 | 20 | 60 | 100 | 15 | 20 | 10 | 30 | 50 | 7.5 | 10 | ++ | ++ | ++ |
| 30 | 200 | 20 | 60 | 200 | 15 | 20 | 10 | 30 | 100 | 7.5 | 10 | ++ | - | - |
| 31 | 200 | 20 | 60 | 300 | 15 | 20 | 10 | 30 | 150 | 7.5 | 10 | + | - | - |
| 32 | 200 | 20 | 60 | 50 | 5 | 20 | 10 | 30 | 25 | 2.5 | 10 | + | + | + |
| 33 | 200 | 20 | 60 | 50 | 10 | 20 | 10 | 30 | 25 | 5 | 10 | ++ | ++ | ++ |
| 34 | 200 | 20 | 60 | 50 | 30 | 20 | 10 | 30 | 25 | 15 | 10 | +++ | +++ | +++ |
| 35 | 200 | 20 | 60 | 50 | 45 | 20 | 10 | 30 | 25 | 22.5 | 10 | +++ | +++ | +++ |
| 36 | 200 | 20 | 60 | 50 | 60 | 20 | 10 | 30 | 25 | 30 | 10 | +++ | ++ | +++ |
| 37 | 200 | 20 | 60 | 50 | 120 | 20 | 10 | 30 | 25 | 60 | 10 | +++ | + | + |
| 38 | 200 | 20 | 60 | 50 | 180 | 20 | 10 | 30 | 25 | 90 | 10 | ++ | - | - |
| 39 | 200 | 20 | 60 | 50 | 15 | 5 | 10 | 30 | 25 | 7.5 | 2.5 | - | - | - |
| 40 | 200 | 20 | 60 | 50 | 15 | 10 | 10 | 30 | 25 | 7.5 | 5 | + | + | + |
| 41 | 200 | 20 | 60 | 50 | 15 | 40 | 10 | 30 | 25 | 7.5 | 20 | ++ | ++ | ++ |
| 42 | 200 | 20 | 60 | 50 | 15 | 80 | 10 | 30 | 25 | 7.5 | 40 | - | - | - |
| 43 | 200 | 20 | 60 | 50 | 15 | 120 | 10 | 30 | 25 | 7.5 | 60 | - | - | - |

### [Experiment Example 2]

A seasoning composition powder of this invention was obtained by pulverizing and mixing 100 g of potassium chloride, 20 g of histidine hydrochloride, 25 g of lysine hydrochloride, 10 g of sodium inosinate (IN (TRI) ; product of Ajinomoto Co., Inc.), 58 g (40 g as lactic acid) of calcium lactate (anhydride), and 25 g of di-potassium phosphate (anhydride). A solution containing 0.48% (w/w) of the thus-obtained powder and having a sodium concentration of 0.31% (NaCl equivalent: 0.8%) was prepared, and a saltiness degree comparison between the thus-obtained solution and a 1% NaCl solution was conducted by five tasting panel members through a taste evaluation. The evaluation was performed based on 5 point scale of from -2 (very weak or very unfavorable) to 2 (very strong or very favorable). In order to conduct comparisons with the reported various technologies, the following samples were prepared as comparative examples.

### [Comparative Example 1] (JP-A-57-138359)

To 100 g of potassium chloride, 2 g of glycine and 1 g of alanine were added and mixed to obtain a seasoning powder of Comparative Example 1. 2.06 g of this powder was dissolved into 1 L of tap water, followed by adding sodium chloride to adjust a sodium concentration to 0.31% (NaCl equivalent: 0.8%), thereby obtaining a solution of Comparative Example 1.

### [Comparative Example 2] (JP-A-57-138359)

To 100 g of potassium chloride, 1 g of glycyrrhizin and 1 g of sodium glycyrrhizinate were added and mixed to obtain a seasoning powder of Comparative Example 2. 2.02 g of this powder was dissolved into 1 L of tap water, followed by adding sodium chloride to adjust a sodium concentration to 0.31% (NaCl equivalent: 0.8%), thereby obtaining a solution of Comparative Example 2.

### [Comparative Example 3] (JP-A-57-163464)

A salt substitute was obtained by pulverizing and uniformly mixing 10 parts of histidine hydrochloride, 10 parts of 5'-sodium guanylate, 5 parts of ribotide (a composition containing 5'-guanylic acid and 5'-inosinic acid at a ratio of 1:1; product of Takeda Pharmaceutical Company Limited), and 5 parts of glycimin (a composition containing 0.9 part of glycyrrhizin, 1.8 parts of sodium citrate, and 2.4 parts of dextrin; product of Maruzen Kagaku Kabushiki Kaisha). 4.0 g of the thus-obtained powder was dissolved into 1 L of tap water, followed by adding sodium chloride to adjust a sodium concentration to 0.31% (NaCl equivalent: 0.8%), thereby obtaining a solution of Comparative Example 3.

### [Comparative Example 4] (JP-A-57-163464)

A salt substitute seasoning was prepared in the same manner as in Comparative Example 3 except for using lysine hydrochloride in place of histidine hydrochloride. 4.0 g of the thus-obtained powder was dissolved into 1 L of tap water, followed by adding sodium chloride to adjust a sodium concentration to 0.31% (NaCl equivalent: 0.8%), thereby obtaining a solution of Comparative Example 4.

### [Comparative Example 5] (JP-A-18861)

With 1 kg of potassium chloride, 100 g of calcium lactate and 30 g of sodium 5' -ribonucleotide were mixed, and the mixture was pulverized to obtain a seasoning composition in the form of a powder. 3.0 g of the thus-obtained powder was dissolved into 1 L of tap water, followed by adding sodium chloride to adjust a sodium concentration to 0.31% (NaCl equivalent: 0.8%), thereby obtaining a solution of Comparative Example 5.

### [Comparative Example 6] (JP-A-4-108358)

A seasoning powder of Comparative Example 6 was obtained by mixing and pulverizing 80 parts of potassium chloride, 5 parts of calcium citrate, 5 parts of calcium gluconate, 5 parts of magnesium lactate, and 5 parts of magnesium glutamate. 10 g of the thus-obtained powder was dissolved into 1 L of tap water, followed by adding sodium chloride to adjust a sodium concentration to 0.31% (NaCl equivalent: 0.8%), thereby obtaining a solution of Comparative Example 6.

### [Comparative Example 7] (Japanese Patent No. 2991687)

A seasoning powder of Comparative Example 7 was obtained by mixing and pulverizing 100 g of potassium chloride, 15 g of calcium lactate, 15 g of ammonium chloride, and 15 g of sodium L-aspartate. 5 g of the thus-obtained powder was dissolved into 1 L of tap water, followed by adding sodium chloride to adjust a sodium concentration to 0.31% (NaCl equivalent: 0.8%), thereby obtaining a solution of Comparative Example 7.

### [Comparative Example 8] (JP-A-2002-233326)

A seasoning powder of Comparative Example 8 was obtained by mixing and pulverizing 100 g of potassium chloride, 3.0 g of sodium glutamate (Ajinomoto; product of Ajinomoto Co., Inc.), 1.5 g of a sorbitol powder, 2.0 g of sugar, and 0.2 g of sodium inosinate (IN (TRI); product of Ajinomoto Co., Inc.). 5.0 g of the thus-obtained powder was dissolved into 1 L of tap water, followed by adding sodium chloride to adjust a sodium concentration to 0.31% (NaCl equivalent: 0.8%), thereby obtaining a solution of Comparative Example 8.

An evaluation was conducted after adjusting the sodium concentration of each of the solutions of the comparative examples to 0.31% (NaCl equivalent: 0.8%) by adding sodium chloride. Results of the sensory evaluation are shown in Table 2. As shown in Table 2, it was confirmed that the seasoning of this invention has strong saltiness that is equivalent to or stronger than that of the reported technologies as well as more favorable flavor than the reported technologies.

**[Table 2]**

| Sample No. | Sample | Saltiness | Favorableness of taste |
|---|---|---|---|
| Control | NaCl 1.0% | 2.0 | 2.0 |
| 1 | Seasoning of this invention | 1.8 | 1.8 |
| 2 | Comp. Ex. 1 | 1.2 | 1.0 |
| 3 | Comp. Ex. 2 | 0.9 | 0.8 |
| 4 | Comp. Ex. 3 | 0.5 | 0.4 |
| 5 | Comp. Ex. 4 | 0.6 | 0.5 |
| 6 | Comp. Ex. 5 | 1.2 | 1.0 |
| 7 | Comp. Ex. 6 | 1.0 | 1.3 |
| 8 | Comp. Ex. 7 | 1.6 | 1.3 |
| 9 | Comp. Ex. 8 | 1.7 | 1.8 |

### [Experiment Example 3]

Investigation on salt of nucleotide to be used in this invention was conducted. In the same manner as in Experiment Example 1, miso soups (soybean paste soup) of compositions shown in Table 3 were prepared. A taste evaluation of the obtained miso soups was conducted by five tasting panel members. As shown in Table 3, the result obtained by using sodium guanylate (GN; product of Ajinomoto Co., Inc.) as nucleic acid is the same as that of sodium inosinate. From the results, it was considered that it is possible to use sodium guanylate for this invention.

**[Table 3]**

| | Concentration when eaten (mg/dL) | | | | | | | | | |
|---|---|---|---|---|---|---|---|---|---|---|
| Sample No. | KCl | His | Lactic acid | Lys | IMP | GMP | Phosphoric acid | Degree of Saltiness | Depth/ Richness | Favorableness of taste |
| 1 | 200 | 20 | 60 | 50 | 15 | 0 | 20 | ++++ | ++++ | ++++ |
| 2 | 200 | 20 | 60 | 50 | 15 | 15 | 20 | ++++ | ++++ | ++++ |
| 3 | 200 | 20 | 60 | 50 | 30 | 0 | 20 | +++ | +++ | +++ |
| 4 | 200 | 20 | 60 | 50 | 0 | 30 | 20 | +++ | +++ | +++ |
| 5 | 200 | 20 | 60 | 50 | 45 | 0 | 20 | +++ | +++ | +++ |
| 6 | 200 | 20 | 60 | 50 | 0 | 45 | 20 | +++ | +++ | +++ |

### [Experiment Example 4]

Aqueous solutions containing 0.12% to 2.4% of the seasoning composition powder used in Experiment Example 2 were prepared, and NaCl was added to each of the aqueous solutions to adjust a sodium concentration thereof to 0.31% (NaCl equivalent: 0.8%). A sensory evaluation was conducted by five tasting panel members. In the sensory evaluation, a sample having a sodium concentration of 0.4% (w/w; NaCl equivalent: 1.0%) was used as a control, and a degree of saltiness and favorableness of taste of the control solution were set to ++++, so that the evaluation was conducted based on 5 point scale of from - (no saltiness or very unfavorable) to ++++. Results are shown in Table 4. As shown in Table 4, it was confirmed that the samples containing 0.24% to 1.8% (0.1% to 0.75% as KC1) of the seasoning of this invention exhibited saltiness, and that the favorableness of the samples were within the allowable range. The above results suggest that it is desirable to add the seasoning of this invention at a concentration as KC1 of 0.1% to 0.75%.

**[Table 4]**

| Sample | Seasoning composition powder concentration | Saltiness | Bitterness | Favorableness of taste |
|---|---|---|---|---|
| 1 | 0.12% | - | - | - |
| 2 | 0.24% | + | - | + |
| 3 | 0.48% | ++ | - | ++ |
| 4 | 0.72% | ++ | - | ++ |
| 5 | 0.96% | +++ | - | +++ |
| 6 | 1.20% | ++++ | - | ++++ |
| 7 | 1.44% | ++++ | - | ++++ |
| 8 | 1.68% | ++++ | - | ++++ |
| 9 | 1.80% | ++++ | - | +++ |
| 10 | 2.04% | ++++ | ± | + |
| 11 | 2.16% | ++++ | + | - |
| 12 | 2.40% | ++++ | ++ | - |

### [Example 1]

A seasoning composition powder of this invention was obtained by mixing and pulverizing 100 g of potassium chloride, 20 g of histidine hydrochloride, 25 g of lysine hydrochloride, 10 g of sodium inosinate (IN (TRI); product of Ajinomoto Co., Inc.), 58 g (40 gas lactic acid) of calcium lactate (anhydride), and 25 g of di-potassium phosphate (anhydride). By using the thus-obtained seasoning composition powder, boiled aroids were prepared. In accordance with the composition of Table 5, a portion including seasonings and seasoning liquids were heated in a pan, and, when the portion came to a boil, frozen aroids were thrown into the boiling portion. After resuming boiling, the aroids were heated for 15 minutes to obtain the boiled aroids. Boiled aroids using sodium chloride was prepared in the same manner, and a comparative evaluation was conducted by ten tasting panel members. The evaluation was conducted by 5 point scale of from -2 (very weak or very unfavorable) to 2 (very strong or very favorable). Results of the sensory evaluation are shown in Table 6. It was revealed that high marks were given to the boiled aroids of this invention in terms of integrated taste and favorableness of flavor, which are comparable to the control. From the results, it was proved that it is possible to provide cooked foods that are reduced in salt and exhibits good taste according to this invention.

**[Table 5]**

| Ingredients | This invention | Control |
|---|---|---|
| Aroid (frozen) | 400 g | 400 g |
| Mirin (Japanese sweet cooking rice wine) | 4 | 4 |
| Sugar | 14 | 14 |
| Light-taste soy sauce | 20 | 20 |
| Japanese rice wine | 12 | 12 |
| Salt | 0.5 | 2 |
| Seasoning composition of this invention | 1.6 | - |
| Water | 347.9 | 348 |

**[Table 6]**

| Evaluation item (-2 to 2) | This invention | Control |
|---|---|---|
| Degree of saltiness | 1.05 | 1.10 |
| Favorableness of saltiness | 1.20 | 1.20 |
| Degree of bitterness | -1.30 | -1.40 |
| Degree of harshness | -1.05 | -1.20 |
| Favorableness of flavor | 1.00 | 1.15 |
| Degree of depth/richness | 1.20 | 1.05 |
| Favorableness of integrated taste | 1.17 | 1.07 |

### [Example 2]

A soup for udon (Japanese wheat noodle) was prepared by using the seasoning composition powder obtained in Example 1. The udon soup was obtained by mixing seasonings and seasoning liquids in accordance with compositions of Table 7. An udon soup using sodium chloride was prepared to conduct a comparative evaluation by ten tasting panel members. The evaluation was conducted based on 5 point scale of from -2 (very weak or very unfavorable) to 2 (very strong or very favorable). Results of the sensory evaluation are shown in Table 8. It was revealed that high marks were given to the udon soups according to this invention in terms of integrated taste and favorableness of flavor as compared to the control (using sodium chloride). From the results, it was proved that it is possible to provide soups reduced in salt and exhibiting favorable flavor according to this invention.

**[Table 7]**

| Ingredients | This invention | Control |
|---|---|---|
| Light-taste soy sauce | 30 g | 30 g |
| Mirin | 2 | 2 |
| Sugar | 3 | 3 |
| "Honzukuri-Ichibandashi" (bonito/kelp) | 50 | 50 |
| Salt | 1 | 4 |
| Seasoning composition of this invention | 4 | - |
| Water (hot water) | 910 | 911 |

**[Table 8]**

| Evaluation item (-2 to 2) | This invention | Control |
|---|---|---|
| Degree of saltiness | 0.80 | 0.87 |
| Favorableness of saltiness | 1.00 | 0.97 |
| Degree of bitterness | -1.30 | -1.25 |
| Degree of harshness | -1.05 | -1.10 |
| Favorableness of flavor | 1.07 | 0.90 |
| Degree of depth/richness | 0.95 | 0.80 |
| Favorableness of integrated taste | 1.17 | 1.07 |

### [Example 3]

A seasoning material powder of this invention was obtained by pulverizing and mixing 100 g of potassium chloride, 20 g of histidine hydrochloride, 25 g of lysine hydrochloride, 10 g of sodium inosinate (IN (TRI); product of Ajinomoto Co., Inc.), 58 g (40 g as lactic acid) of calcium lactate (anhydride), 25 g of di-potassium phosphate (anhydride), and 50 g of dried bonito. 4.0 g of the thus-obtained seasoning material powder and 50 g of commercially available white soybean paste were dissolved into 1 L of hot water to prepare a miso soup of this invention. Sodium chloride was added to the miso soup to adjust a sodium concentration thereof to 0.31% (NaCl equivalent: 0.8%). Also, a miso soup (sodium: 0.4%, NaCl equivalent: 1.0%) obtained by dissolving 50 g of the commercially available white soybean paste and 3. 8 g of sodium chloride into 1 L of hot water was used as a control. A comparative evaluation was conducted on the two types of miso soups by ten tasting panel members. The evaluation was conducted based on 5 point scale of from -2 (very weak or very unfavorable) to 2 (very strong or very favorable). Results of the sensory evaluation are shown in Table 9. It was revealed that high marks were given to the miso soup according to this invention in terms of integrated taste and favorableness of flavor as compared to the control (using sodium chloride). From the results, it was proved that it is possible to provide the miso soup reduced in salt and exhibiting favorable flavor according to this invention.

**[Table 9]**

| Evaluation item (-2 to 2) | This invention | Control |
|---|---|---|
| Degree of saltiness | 0.95 | 0.90 |
| Favorableness of saltiness | 0.95 | 0.90 |
| Degree of bitterness | -1.10 | -1.00 |
| Degree of harshness | -0.60 | -1.00 |
| Favorableness of flavor | 1.20 | 1.30 |
| Degree of depth/richness | 1.15 | 0.90 |
| Favorableness of integrated taste | 1.25 | 1.35 |

### [Example 4]

By using the seasoning material powder obtained in Example 3, a plane soup was prepared. The plane soup of this invention was prepared by dissolving 2.5 g of the seasoning material powder and 30 g of commercially available heavy-taste soy sauce into 1 L of hot water. Sodium chloride was added to the plane soup to adjust a sodium concentration thereof to 0.31% (NaCl equivalent: 0.8%). Also, a plane soup obtained by dissolving 30 g of the commercially available heavy-taste soy sauce and 4.0 g of sodium chloride into 1 L of hot water was used as a control (sodium: 0.4%, NaCl equivalent: 1.0%). A comparative evaluation was conducted on the two types of plane soups by ten tasting panel members. The evaluation was conducted based on 5 point scale of from -2 (very weak or very unfavorable) to 2 (very strong or very favorable). Results of the sensory evaluation are shown in Table 10. It was revealed that high marks were given to the plane soup according to this invention in terms of integrated taste and favorableness of flavor as compared to the control (using sodium chloride). From the results, it was proved that it is possible to provide the plane soup reduced in salt and exhibiting favorable flavor according to this invention.

**[Table 10]**

| Evaluation item (-2 to 2) | This invention | Control |
|---|---|---|
| Degree of saltiness | 0.80 | 0.75 |
| Favorableness of saltiness | 1.10 | 0.90 |
| Degree of bitterness | -1.00 | -1.25 |
| Degree of harshness | -1.05 | -1.30 |
| Favorableness of flavor | 1.30 | 1.17 |
| Degree of depth/richness | 1.30 | 1.07 |
| Favorableness of integrated taste | 1.25 | 1.07 |

### [Example 5]

By using the seasoning material powder obtained in Example 3, an udon soup was prepared. The udon soup of this invention was prepared by dissolving 2.5 g of the seasoning material powder, 30 g of a commercially available light-taste soy sauce, 3 g of sugar, 2 g of mirin (Japanese sweet cooking rice wine), and 50 g of "Honzukuri-Ichibandashi" (bonito/kelp soup stock manufactured by Ajinomoto Co., Inc.) into 1 L of hot water. Sodium chloride was added to the plane soup to adjust a sodium concentration thereof to 0.27% (NaCl equivalent: 0.7%). Also, an udon soup obtained by dissolving 30 g of the commercially available light-taste soy sauce, 4.0 g of sodium chloride, 3 g of sugar, 2 g of mirin, and 50 g of "Honzukuri-Ichibandashi" (bonito/kelp soup stock manufactured by Ajinomoto Co., Inc.) into 1 L of hot water was used as a control (sodium: 0.4%, NaCl equivalent: 1.0%). A comparative evaluation was conducted on the two types of udon soups by ten tasting panel members. The evaluation was conducted based on 5 point scale of from -2 (very weak or very unfavorable) to 2 (very strong or very favorable). Results of the sensory evaluation are shown in Table 11. It was revealed that high marks were given to the udon soup according to this invention in terms of integrated taste and favorableness of flavor as compared to the control (using sodium chloride). From the results, it was proved that it is possible to provide the udon soup reduced in salt and exhibiting favorable flavor according to this invention.

**[Table 11]**

| Evaluation item (-2 to 2) | This invention | Control |
|---|---|---|
| Degree of saltiness | 0.75 | 0.80 |
| Favorableness of saltiness | 0.80 | 0.85 |
| Degree of bitterness | -1.15 | -1.35 |
| Degree of harshness | 1.05 | -1.20 |
| Favorableness of flavor | 1.07 | 0.90 |
| Degree of depth/richness | 1.15 | 0.87 |
| Favorableness of integrated taste | 1.30 | 1.15 |

### [Example 6]

A seasoning material powder of this invention was obtained by pulverizing and mixing 100 g of potassium chloride, 10 g of histidine hydrochloride, 20 g of lysine hydrochloride, 10 g of sodium inosinate (IN (TRI); product of Ajinomoto Co., Inc.), 10 g of sodium guanylate (GN; product of Ajinomoto Co., Inc.), 58 g (40 g as lactic acid) of calcium lactate (anhydride), 25 g of di-potassium phosphate (anhydride), 20 g of a chicken extract powder (product of Ajinomoto Co., Inc.), and 10 of a pork extract powder (product of Maruzen Food Industry Co., Ltd.). Soups for Chinese noodle of this invention and of a control were prepared by using the thus-obtained seasoning material powder and mixing and dissolving ingredients in accordance with compositions of Table 12. Sodium chloride was added to each of the Chinese noodle soups to adjust a sodium concentration thereof to 0.31% (NaCl equivalent: 0.8%). A comparative evaluation was conducted on the two types of Chinese noodle soups by five tasting panel members. The evaluation was conducted based on 5 point scale of from -2 (very weak or very unfavorable) to 2 (very strong or very favorable). Results of the sensory evaluation are shown in Table 13. It was revealed that high marks were given to the Chinese noodle soup according to this invention in terms of integrated taste and favorableness of flavor as compared to the control. From the results, it was proved that it is possible to provide the Chinese noodle soup reduced in salt and exhibiting favorable flavor according to this invention.

**[Table 12]**

| Ingredients | This invention | Control |
|---|---|---|
| Heavy-taste soy sauce | 40 g | 40 g |
| Salt | 2.0 | 4.0 |
| Sugar | 1.1 | 1.1 |
| MSG | 2.5 | 2.5 |
| IN | 0.5 | 0.5 |
| Garlic paste | 0.2 | 0.2 |
| White pepper | 0.1 | 0.1 |
| Seasoning material powder of this invention | 2.6 | - |
| Chicken extract powder | - | 0.2 |
| Port extract powder | - | 0.2 |
| Water (hot water) | 910 | 911 |

**[Table 13]**

| Evaluation item (-2 to 2) | This invention | Control |
|---|---|---|
| Degree of saltiness | 0.75 | 0.75 |
| Favorableness of saltiness | 1.00 | 0.97 |
| Degree of bitterness | -1.15 | -1.25 |
| Degree of harshness | -1.00 | -1.20 |
| Favorableness of flavor | 1.17 | 0.90 |
| Degree of depth/richness | 1.25 | 0.95 |
| Favorableness of integrated taste | 1.17 | 1.00 |

### [Example 7]

A seasoning material powder of this invention was obtained by pulverizing and mixing 100 g of potassium chloride, 10 g of histidine hydrochloride, 20 g of lysine hydrochloride, 10 g of sodium inosinate (IN (TRI); product of Ajinomoto Co., Inc.), 10 g of sodium guanylate (GN; product of Ajinomoto Co., Inc.), 58 g (40 g as lactic acid) of calcium lactate (anhydride), 25 g of di-potassium phosphate (anhydride), and 20 g of a chicken extract powder (product of Nikken Foods Co., Ltd.). A vegetable soup was prepared by using the seasoning material powder and subjected to a sensory evaluation. The vegetable soup of this invention was obtained by adding a piece (5.3 g) of commercially available consommé cube (product of Ajinomoto Co., Inc.), 2.4 g of the seasoning material powder of this invention, 1.15 g of salt, and commercially available mixed vegetables to 600 g of water, followed by heating for 5 minutes after boiling. Also, a vegetable soup as a control was obtained by adding a piece (5.3 g) of commercially available consommé cube (product of Ajinomoto Co., Inc.), 2.3 g of salt, and commercially available mixed vegetables to 600 g of water, followed by heating for 5 minutes after boiling. A comparative evaluation was conducted on the two types of vegetable soups by five tasting panel members. The evaluation was conducted based on 5 point scale of from -2 (very weak or very unfavorable) to 2 (very strong or very favorable). Results of the sensory evaluation are shown in Table 14. It was revealed that high marks were given to the Chinese noodle soup according to this invention in terms of integrated taste and favorableness of flavor as compared to the control. From the results, it was proved that it is possible to provide the soup reduced in salt and exhibiting favorable flavor according to this invention.

**[Table 14]**

| Evaluation item (-2 to 2) | This invention | Control |
|---|---|---|
| Degree of saltiness | 1.20 | 1.15 |
| Favorableness of saltiness | 1.20 | 1.30 |
| Degree of bitterness | -1.00 | -1.25 |
| Degree of harshness | -0.95 | -1.07 |
| Favorableness of flavor | 1.07 | 0.97 |
| Degree of depth/richness | 1.20 | 1.00 |
| Favorableness of integrated taste | 1.17 | 1.00 |

### [Example 8]

A liquid seasoning material composition of this invention was obtained by dissolving 100 g of potassium chloride, 20 g of histidine hydrochloride, 25 g of lysine hydrochloride, 10 g of sodium inosinate (IN (TRI); product of Ajinomoto Co., Inc.), 100 g (40 g as lactic acid) of sodium lactate (anhydride), and 25 g of di-potassium phosphate (anhydride) into distilled water to adjust a total weight to 1 kg. By using the thus-obtained seasoning composition, an udon soup was prepared. The udon soup of this invention was prepared by dissolving 40 g of the seasoning composition, 30 g of a commercially available light-taste soy sauce, 3 g of sugar, 2 g of mirin, and 50 g of "Honzukuri-Ichibandashi" (bonito/kelp soup stock manufactured by Ajinomoto Co., Inc.) into 1 L of hot water. Sodium chloride was added to the udon soup to adjust a sodium concentration thereof to 0.27% (NaCl equivalent: 0.7%). Also, an udon soup obtained by dissolving 30 g of the commercially available light-taste soy sauce, 4.0 g of sodium chloride, 3 g of sugar, 2 g of mirin, and 50 g of "Honzukuri-Ichibandashi" (bonito/kelp soup stock manufactured by Ajinomoto Co., Inc.) into 1 L of hot water was used as a control (sodium: 0.4%, NaCl equivalent: 1.0%). A comparative evaluation was conducted on the two types of udon soups by ten tasting panel members. The evaluation was conducted based on 5 point scale of from -2 (very weak or very unfavorable) to 2 (very strong or very favorable). Results of the sensory evaluation are shown in Table 15. It was revealed that high marks were given to the udon soup according to this invention in terms of integrated taste and favorableness of flavor as compared to the control (using sodium chloride). From the results, it was proved that it is possible to provide the udon soup reduced in salt and exhibiting favorable flavor according to this invention.

**[Table 15]**

| Evaluation item (-2 to 2) | This invention | Control |
|---|---|---|
| Degree of saltiness | 0.85 | 0.75 |
| Favorableness of saltiness | 1.00 | 0.97 |
| Degree of bitterness | -1.05 | -1.10 |
| Degree of harshness | -1.00 | -1.07 |
| Favorableness of flavor | 1.07 | 0.90 |
| Degree of depth/richness | 1.20 | 1.05 |
| Favorableness of integrated taste | 1.07 | 1.00 |

### Industrial Applicability

As described in the foregoing, it was proved that it is possible to provide a seasoning composition capable of reducing salt and excellent in flavor by containing, with respect to 100 parts by weight of potassium chloride, 1.5 to 70 parts by weight of histidine or its salt, 4 to 1000 parts by weight of lysine or its salt, 2 to 100 parts by weight of sodium inosinate or sodium guanylate, 20 to 130 parts by weight of lactic acid or its salt, and 5 to 50 parts by weight of phosphoric acid or its salt.

Also, it was revealed that it is possible to obtain a seasoning material having more favorable flavor and capable of reducing salt in foods by mixing the seasoning composition with a seafood extract, a dried seafood powder, a seafood powder, a meat extract, or a meat powder. Also, by using the seasoning composition or the seasoning material obtained by the above technologies, it is possible to provide foods reduced in salt content and excellent in flavor. Also, it is possible to provide foods excellent in flavor such as favorableness of saltiness and depth and richness of taste.

## Claims

1. A seasoning composition **characterized by** comprising, with respect to 100 parts of potassium chloride, 1. 5 to 70 parts by weight of histidine or its salt, 4 to 100 parts by weight of lysine or its salt, 2 to 100 parts by weight of sodium inosinate or sodium guanylate, 20 to 130 parts by weight of lactic acid or its salt, and 5 to 50 parts by weight of phosphoric acid or its salt.

2. A seasoning material **characterized by** comprising, with respect to 100 parts by weight of the seasoning composition defined in claim 1, 1 to 100 parts by weight in solid content of a seafood extract or a dried seafood powder.

3. A seasoning material **characterized by** comprising, with respect to 100 parts by weight of the seasoning composition defined in claim 1, 1 to 100 parts by weight in solid content of a meat extract or a meat powder.

4. A method for producing foods **characterized by** seasoning with the use of the seasoning composition or the seasoning material defined in claims 1 to 3.
